# EUROPÄISCHE PATENTSCHRIFT

(11) **EP 3 378 623 B1**
(45) Veröffentlichungstag und Bekanntmachung des Hinweises auf die Patenterteilung: **02.08.2023**
(21) Anmeldenummer: 17161756.6
(22) Anmeldetag: 20.03.2017
(51) Int. Cl.: E04D 5/10, B29C 48/21, B32B 27/08, B32B 27/20, B32B 33/00

(54) **THERMOCHROME DICHTUNGSBAUELEMENTE**
THERMOCHROMATIC SEAL COMPONENTS
ÉLÉMENTS D'ÉTANCHÉITÉ THERMOCHROMES

(43) Veröffentlichungstag der Anmeldung: 26.09.2018
(73) Patentinhaber: Lucobit AG, 50389 Wesseling (DE)
(72) Erfinder: RIEGLER, Robert, 67459 Böhl-Iggelheim (DE); LEHMANN, Harald, 53340 Meckenheim (DE)
(74) Vertreter: btb IP Bungartz Baltzer Partnerschaft mbB Patentanwälte

(56) Entgegenhaltungen:
- EP-A2- 1 726 733
- US-A- 5 002 624
- US-A1- 2004 033 741
- US-A1- 2007 194 482
- US-A1- 2008 008 857
- US-A1- 2011 256 381
- US-A1- 2014 087 174

## Beschreibung

Die Erfindung betrifft ein thermochromes Dichtungsbauelement, insbesondere in Form einer Dichtungsbahn, einer Dichtungsplatte oder anderen Dichtungsbauelementen, nach dem Oberbegriff des Anspruchs 1.

Die erfindungsgemäßen Dichtungsbauelemente werden meist zur Abdichtung von Gebäuden verwendet und in üblicherweise aber nicht zwingen überlappend verlegt, wobei die Stoßkanten über schweiß- oder Klebeverbindungen abgedichtet werden. Sie werden zur Abdichtung von Flachdächern, aber auch zum Dichten von Schwimmbädern oder ähnlichen Flächen gegen Feuchtigkeit verwendet. Sie können als Folie, als Dachbahn oder auch in Form von Platten, Anschlusselementen oder Klebebändern ausgebildet sein.

Dichtungsbauelemente sind aus der EP 2 299 021 A2 bekannt. Die Formmassen zur Herstellung der Dichtungsbauelemente bestehen meist im Wesentlichen aus vier verschiedenen Bestandteilen:
- Polymere, beispielsweise aus einem Ethylen-Butylacrylat-Copolymer (EBA), aus Polyethylen (PE), Polypropylen (PP), Ethylen-Copolymer-Bitumen (ECB),
- Füllstoffen, z.B. Kreide oder Magnesiumhydroxid [Mg(OH)2],
- Stabilisatoren, z.B. gegen UV-Belastung oder thermooxidativen Abbau bei der Verarbeitung und/oder im Gebrauch und
- Farbpigmenten.

Die Farbeinstellungen sind je nach Anwendung und Kundenwunsch unterschiedlich und reichen von schwarzen über graue bis hin zu weißen Materialien, es sind aber auch Blau-, Braun- oder Grüntöne möglich. Bei den bekannten Dichtungsbauelementen ist jedoch die im Herstellprozess durch die zugesetzten Pigmente eingestellte Farbe nicht mehr veränderlich. Andererseits ist die Farbe der Dichtungsbauelemente ein nicht unwesentlicher Einflussfaktor hinsichtlich der physikalischen Eigenschaften, insbesondere bezüglich Reflektions- und Absorptionsverhalten.

Der Nachteil der bekannten Dichtungsbauelemente besteht unabhängig von der jeweiligen Verwendung darin, dass diese nicht in der Lage sind, sich auf veränderliche Umgebungsparameter, z.B. veränderte Witterungseinflüsse oder Jahreszeiten einzustellen.

Darüber hinaus werden Bitumen-Schweißbahnen verwendet, die ein beidseitig mit Bitumen beschichteter Baustoff zur Bauwerksabdichtung sind. Sie werden vorzugsweise zur Dachabdichtung eingesetzt und bestehen aus einem Trägermaterial, zum Beispiel Glas- oder Kunststoffvlies, das mit dem Bitumen beschichtet ist.

Aus der WO 2011/066590 A2 ist eine thermochromatische Beschichtung bekannt, die im Bauwesen, beispielsweise als Dachabdeckung, verwendet wird. Diese Beschichtung besteht aus einem bituminösen Trägermaterial, zum Beispiel aus dem üblicherweise für Dachdichtungsbahnen verwendeten Ethylen-Propylen-DienKautschuk (EPDM), und einer thermochromatischen Abdeckschicht, die aufgrund der thermochromatischen Eigenschaft in Abhängigkeit der Temperatur ihre Farbe ändert. Auch aus der US 5 571 596 A ist der Einsatz von thermochromen Stoffen in Verbindung mit dem Baubereich bekannt.

Die US 2008/0008857 A1 beschreibt eine zur Außenanwendung vorgesehene Oberflächenbeschichtung mit thermochromen Pigmenten. Ein Bauelement für eine Dacheindeckung mit einem mit thermochromen Pigmenten versehenen Indikatorfenster ist aus der EP 1 726 733 A1 bekannt. Beide Dokumente zeigen zwar grundsätzlich die Verwendung von thermochromen Pigmenten, allerdings haben die daraus hergestellten Produkte den Nachteil, dass die Pigmente während der Verarbeitung einen zu großen Anteil der zu Verfügung stehenden Farbumschläge einbüßen.

Auch die DE 10 2012 215 459 A1 beschreibt einen Baustoff, der zur Beschichtung eines Gebäudes geeignet ist und thermochrome Eigenschaften besitzt. Dieser Baustopp ist eigentlich ein Anstrich, der auf einen bereits vorhandenen Dichtstoff aufgebracht wird. Dies hat aber neben dem Nachteil, dass ein weiterer Arbeitsschritt notwendig ist, den zusätzlichen Nachteil, dass sich die Beschichtung mit der Zeit von dem oft bituminösen Grundstoff löst. Auch die US 5 571 596 beschreibt die Beschichtung von Dachschindeln mit einem thermochromen Stoff.

Thermochrome Eigenschaft oder allgemein Thermochromie bedeutet hierbei die Änderung der Farbe in Abhängigkeit von der Temperatur. Der Vorgang der Farbänderung ist dabei reversibel, das heißt nach dem Abkühlen nehmen die Dachdichtungsbahnen wieder ihre ursprüngliche Farbe an. Grund für die Farbveränderungen sind Änderungen der Molekül- oder der Kristallstruktur.

Der Nachteil dieses thermochromen Materials besteht in seinem mehrschichtigen Aufbau. Auf die bituminöse Trägerschicht wird eine Folie aus Polyurethan-Harz, die thermochrome Partikel enthält, aufgebracht. Auf diese Folie wiederum wird dann empfohlen, eine transparente Schutzfolie aufzubringen. Dieser Mehrschichtaufbau ist nicht nur vergleichsweise kostenintensiv bei der Herstellung des Produktes, sondern macht auch die Verlegung recht aufwändig, da der Dachdecker oder Schwimmbadbauer vor Ort die Folie unter Schutz der oberen Schichten verlegen muss.

Aus der US 2008/0209825 A1 ist ein farbveränderliches System für wasserdichte Beschichtungen bekannt, die nahtlos im Sprühverfahren aufgebracht werden. Der Schichtaufbau und das Herstellverfahren haben den Nachteil, dass die Dichtungsbahnen nicht geschweißt werden können und sich nicht für großflächige Dichtungsanwendungen eignen.

Aus der DE 10 2012 215 459 A1 ist schließlich ein thermochromatischer Anstrich bekannt, der die Temperaturregelung an Gebäuden über thermochrome Farbstoffe ermöglicht. Dieser hat den Nachteil, dass er sich nicht für Dichtungsaufgaben eignet.

Aufgabe der Erfindung ist es daher, ein Verfahren zur möglichst effektiven und kostengünstigen Herstellung eines Dichtungsbauelementes und ein solches Dichtungsbauelement mit thermochromatischen Eigenschaften zu schaffen, das günstig herstellbar und einfach, möglichst mit bereits vorhandenen Kenntnissen verarbeitet werden kann.

Diese Aufgabe wird nach der Erfindung durch ein Verfahren nach Anspruch 1 und ein Dichtungsbauelement nach Anspruch 8 gelöst.

Mögliche Herstellungsverfahren für thermochrome Dichtungsbauelemente sind die Extrusion im Sinne der Herstellung von Compounds und die Extrusion von Folien und Platten. Diese werden im nachfolgend detaillierter beschrieben.

Darüber kann für die Herstellung von Anschlusselementen auf einem Dach, im Schwimmbad oder an anderen Orten, auch der Spritzguss Verwendung finden, einschließlich des Hinterspritzens beispielsweise von thermochromen Folien, des Tiefziehens und auch des Extrusionsblasformens. Beim Extrusionsblasformen ist es weiterhin nicht nur möglich, nur einen Schmelzeschlauch zu extrudieren und dann Hohlkörper herzustellen, sondern auch einen extrudierten Schlauch zu teilen und mindestens zwei flächige Lagen einer sehr steifen Polymerschmelze zu erzeugen, die dann zu Formkörpern verarbeitet und anschließend wieder zu einem Hohlkörper zusammengefügt werden.

Zur Herstellung (Compoundierung) von Granulaten und Masterbatches kann zum Beispiel folgende Anlagentechnik zum Einsatz kommen: Zum Compoundieren von Granulaten und Masterbatches sind Doppelschnecken-Extruder bzw. Kneter allgemein bekannt. Zur Fertigung von Abdichtungsbahnen werden beispielsweise Materialvormischungen (pulverförmige Dryblends oder bereits compoundierte Granulate) in den Extrudern aufgeschmolzen und in einem angeflanschten Extrusionswerkzeug, in der Regel einer Extrusionsdüse, zum Dichtungsbauelement ausgeformt. Üblicherweise werden hierbei gegenläufige Doppelschneckenextruder verwendet. Nach der Ausformung schließen sich Kalibriertische, Kühleinrichtungen, Abzugsvorrichtungen sowie Abläng- und Anfasseinrichtungen an.

Für die Extrusion von Folien (< 1 mm Dicke) und Platten / Tafeln (Dicke > 1 mm) werden nach den Extrudern Breitschlitzdüsen verwendet. Fertigungsstrecken zur Extrusion von Platten / Tafeln bestehen dagegen meist aus den folgenden Anlagenteilen:
- Extruder oder Coextruder (verschiedene Massen werden in Einschneckenextrudern extrudiert)
- Breitschlitzdüse zur Verteilung der Schmelze(n) auf die entsprechende Breite und zur Sicherstellung, dass die Schmelze(n) in gleichmäßiger Dicke und Austrittsgeschwindigkeit verformen wird/werden, Die Ausführung der Breitschlitzdüse bestimmt dabei die Verteilung der Schmelze(n) in der Düse über Verteilerkanäle
- Glättwerk (Walzenglättwerk) und Abzug zur Festigung der Schmelze und zum Glätten der Oberfläche der Bahn. Hier wird die Bahn spannungsfrei als Rollenbahn abgezogen
- Quertrenneinrichtung

Die Verteilung der Schmelze in der Düse erfolgt über einen Verteilerkanal, der die Form eines Kleiderbügels (Kleiderbügelkanal) oder Fischschwanzes haben kann.

Für die Herstellung mehrschichtiger Flachfolien und Platten können entweder Einschichtdüsen in Kombination mit Coextrusionsadaptern (Feedblock) oder Mehrschichtdüsen eingesetzt werden. Die Kombination einer Einschichtdüse mit einem Coextrusionsadapter ermöglicht, Lagenkonfigurationen flexibel aufzubauen und damit anspruchsvollste Verbundfolien und -platten zu realisieren. Bei der Coextrusion werden zur Plastifizierung in der Regel Einschneckenextruder für jedes Material eingesetzt. An die Extruder schließt sich eine Breitschlitzdüse mit Coextrusionsadaptern an. Die Schmelzströme werden dann in der Breitschlitzdüse zu einer Schmelzfahne über die gewünschte Breite ausgeformt.

Mehrschichtdüsen bzw. Mehrkanaldüsen besitzen für jede Schicht einen eigenen Verteilerkanal, der speziell für dieses Material berechnet werden kann. Mehrkanaldüsen bieten sich immer dann an, wenn die zu verarbeitenden Materialien sehr unterschiedliche Fließeigenschaften aufweisen und eine Extrusion über Coextrusionsadapter (Mehrschichtadapter, Feedblock) keine zufrieden stellende Schichtverteilung ermöglicht. Typischerweise kann eine Mehrkanaldüse einen größeren Bereich der zu verarbeitenden Materialien abdecken, als es ein Co-Extrusionsadapter vermag.

Die mit den oben genannten Anlagen hergestellten Dichtungsbauelemente sollen beispielsweise konventionelle, flächige Dichtungsbahnen in die Lage versetzen, auf Veränderungen in der Umgebung zu reagieren, vorzugsweise durch Änderung der Farbe in Abhängigkeit der Temperatur, um beispielsweise im Winter dunkel und im Sommer hell sein zu können. Ferner spielt der Effekt der Thermotropie eine Rolle im Zusammenhang mit der vorliegenden Erfindung, das heißt die Transparenz des Materials verändert sich in Abhängigkeit von der Temperatur. Dies hat wiederum Bedeutung für die Reflektionseigenschaften und die Eindringtiefe der wärmenden Strahlung und die Farbänderung der tieferen Bereiche der Dichtungsbahn.

Durch den Farbwechsel kann zum Beispiel eine Dachbahn im Sommer hell und im Winter dunkel sein. Dies bietet Vorteile durch die Regulierung des Reflektionsverhaltens von Dächern, was zu einer bessere Wärmeregulierung unter dem Dach und einer Verbesserung der Taupunktlage führt. Eine Vermeidung einer starken Aufheizung wiederum reduziert die Erwärmung der Räume unter dem Dach und damit den Energieaufwand einer eventuell vorhandenen Klimaanlage. Auch wird die Lebensdauer der Dichtungsbahn erhöht, da sich durch die geringere Aufheizung die zugesetzten Stabilisatoren langsamer verbrauchen.

Im Schwimmbadbereich können ebenfalls Reflektions- und Absorptionseigenschaften genutzt werden, etwa um eine starke Erwärmung der randnahen Bereiche der Dichtungsbahn zu vermeiden. In der Regel werden hier aber dekorative Zwecke im Vordergrund stehen. Auch die Indikation einer entsprechenden Wassertemperatur ist möglich, die angenehme Wassertemperaturen dem Anwender durch einen bestimmten Farbumschlag signalisiert.

Der besondere Vorteil der Erfindung besteht darin, dass die Dichtungsbahnen nicht mit einem thermochromen Stoff beschichtet werden, sondern aus einer Formmasse hergestellt werden, der die thermochromen Partikel enthält. Auf diese Weise ergibt sich eine dauerhafte Verbindung, so dass ein Lösen der thermochromen Beschichtung von der eigentlichen Trägerbahn vermieden werden kann. Um die Dichtungsbahn günstig herstellen zu können, wird der Aufbau mehrschichtig vorgenommen. Eine lastaufnehmende Schicht wird im Inneren der Dichtungsbahn vorgesehen und ist im Wesentlichen für die Aufnahme von Zugkräften in Längs- oder Querrichtung verantwortlich. Unterhalb der lastaufnehmenden Schicht ist die Trägerschicht vorgesehen, die mit dem Untergrund verbunden, insbesondere verklebt wird.

Die Oberflächenschicht, die die thermochromen Pigmente enthält, wird dabei möglichst dünn gehalten, so dass zum einen vermieden wird, dass in tieferen Schichten, in denen die Pigmente ohnehin nicht sichtbar wären, vergleichsweise teure thermochrome Pigmente nutzlos verwendet werden. Weiterhin kann die Materialzusammensetzung der Formmasse zur Herstellung der Oberflächenschicht auf den Inhalt der thermochromen Pigmente abgestimmt werden, damit diese eine maximale Sichtbarkeit erhalten.

Da die Anzahl der Farbumschläge der thermochromen Pigmente begrenzt ist, wird erfindungsgemäß diese Anzahl der Farbumschläge während des Herstellungsverfahrens minimiert. Dies geschieht dadurch, dass die zweite Polymerschmelze, aus der die Oberflächenschicht hergestellt wird, bei einer konstanten, pigmentschonenden Temperatur, z.B. zwischen 150°C und 220°C, bevorzugt zwischen 180° und 200°C verarbeitet wird. Die Konzentration der Pigmente kann zum Beispiel 1% pro m³ betragen.

Die lastaufnehmende Schicht ist bevorzugt eine faserverstärkte Schicht, wobei hier ein Vlies oder auch ein Gewebe eingesetzt werden können. Dies kann beispielsweise eine Glasfaserschicht sein, wobei auch Polyamidfasern oder ähnliche Produkte eingesetzt werden können. Bei einer Ausgestaltung der Erfindung ist die lastaufnehmende Schicht in der aus Sicht der Biegebeanspruchung neutralen Zone, also in der Mitte der Dichtungsbahn vorgesehen. Sofern nun die Dichtungsbahn eine gewisse Dicke erreichen muss, kann zwischen der Oberflächenschicht und der lastaufnehmenden Schicht eine weitere Zwischenschicht vorgesehen werden, die als Bindeschicht dient. Auf gleiche Weise kann auch die Trägerschicht mehrschichtig aufgebaut werden, beispielsweise um eine bessere Verbindung zwischen lastaufnehmender Schicht auf der Oberseite und Gebäudefläche auf der Unterseite realisieren zu können.

Eine alternative Ausgestaltung der Erfindung ist derart aufgebaut, dass die lastaufnehmende Schicht sehr viel weiter oben, unterhalb der thermochromen Oberflächenschicht vorgesehen ist, so dass die überwiegende Dicke der Dichtungsbahn von der Trägerschicht bereitgestellt ist. Ein besonderer Vorteil der Erfindung besteht darin, dass die verwendeten Schichten in Standardmaschinen mit einem Schritt hergestellt werden können. Gleichzeitig kann die Menge der verwendeten thermochromen Partikel minimiert werden, was die Herstellungskosten deutlich senkt, da diese Partikel vergleichsweise teuer sind. Durch die Herstellung in einem kontinuierlichen Arbeitsprozess werden die Schichten, insbesondere die thermochrome Oberflächenschicht im Herrschaftsverfahren, insbesondere thermisch, miteinander verbunden. Auf diese Weise entfällt die Notwendigkeit, die thermochrome Oberflächenschicht durch Kleben oder anderweitig auf der Oberfläche der Zwischenschicht bzw. der lastaufnehmenden Schicht zu befestigen. Gleichzeitig ist der entstehende Verbund deutlich stabiler.

Die Erfindung geht dabei von den klassischen Zusammensetzungen von Formmassen für Dichtungsbahnen aus, wie sie eingangs beschrieben sind. Durch den Zusatz von thermochromen Substanzen im Bereich zwischen 0,1 Gew.-% und 5,0 Gew.-% lässt beispielsweise ein Farbumschlag realisieren. Hierzu wurde als polymerer Kunststoff ein Compound aus einem polaren Copolymer aus Ethylen und Butylacrylat und einem Polyethlen in weißer Farbe mit thermochromen Substanzen gemischt, die bei 25°C bzw. 31°C einen Farbumschlag zeigen.

Die verwendeten thermochromen Substanzen haben dabei die Zusammensetzung:
Farbumschlag bei 25°C:

| | |
|---|---|
| - 1,0% - 5,0 % | Melamin Formaldehyd Harz, |
| - 2,0 - 10% | 3-Diethylamino-6-methyl-7-2,4-xylidinofluoran |
| - 5-15% | 4,4-Isopropylidenediphenol (Bisphenol A) |
| - 25 - 40% | Methylstearat |
| - 25 - 40% | Butylstearat |

Farbumschlag bei 31 °C:

| | |
|---|---|
| - 1,0 - 5% | Melamin Formaldehyd Harz |
| - 2 - 10% | 3-Diethylamino-6-methyl-7-2,4-xylidinofluoran |
| - 50 - 90% | Methylstearat |

Die genannten Substanzen erzielten eindeutige Farbumschläge im genannten Temperaturbereich von dunkel nach hell. Die Spontaneität des Farbumschlags ist dabei von der Wärmekapazität der Formmasse abhängig, die wiederum durch Art des verwendeten Polymers und die Manipulation der Additive, insbesondere der Füllstoffe, in bestimmten Grenzen veränderlich ist. Dies kann genutzt werden, um je nach Anwendungsfall ein unterschiedlich schnelles Einsetzen des Farbumschlages zu realisieren. Es sind grundsätzlich zwei-, drei- und mehrphasige Farbumschläge im Rahmen der gesamten Farbpalette möglich.

Die Formmassen können mit den gängigen Verarbeitungsmethoden für Polymere, im vorliegenden Beispiel im Extrusionsprozeß eingearbeitet werden. Eine Weiterverarbeitung der Formmasse zu flächigen Dichtungsbahnen oder plattenartigen Dichtungselementen mittels Mehrwalzenglättwerken, Kalandern und allen anderen Kunststoffverarbeitungsverfahren ist möglich.

Versuchsrezepturen, mit denen gute Ergebnisse erzielt wurden, bestanden aus:

| | Referenz | Rezeptur 1 | Rezeptur 2 | Rezeptur 3 |
|---|---|---|---|---|
| Copolymer aus Ethylen/Butylacrylat | 50,0% | 50,0% | 50,0% | 50,0% |
| Polyethylen | 32,5% | 32,5% | 32,5% | 32,5% |
| Füllstoff | 10,5% | 10,4% | 8,0% | 5,5% |
| Pigment weiß | 7,0% | 7,0% | 7,0% | 7,0% |
| Pigment schwarz | 0,0% | 0,1% | 2,5% | 5,0% |

für ein Pigment mit Farbumschlag bei 25°C und mit Farbumschlag bei 31°C, je nach verwendetem Pigment. Dabei wurden für den Farbumschlag bei 25°C die Pigmente mit den Handelsnamen Sicolen weiß 00-199 705/Pigment TM-25-Black (schwarz) und für den Farbumschlag bei 25°C die Pigmente mit den Handelsnamen Sicolen weiß 00-199 705/Pigment TM-PDF-31-3141 (schwarz) verwendet.

Die erfindungsgemäße Dichtungsbahn kann wie eine herkömmliche Dachdichtungsbahn oder Schwimmbaddichtungsbahn verwendet werden. Die Befestigung und Abdichtung gegenüber benachbarten Dichtungsbahnen kann auf herkömmliche Weise erfolgen, was die mit der erfindungsgemäßen Formmasse hergestellte dichtungsbahn besonders leicht verarbeitbar machen lässt, da keine neuen Fachkenntnisse erforderlich sind.

Insbesondere müssen keine zusätzlichen Schichten aufgebaut werden oder neue Fügetechniken beachtet werden. Zur Ermöglichung einer Heißluftverschweißung angrenzender Dichtungsbahnen kann in zumindest einem seitlichen Randbereich, wie auch schon bei den bekannten Dachdichtungsbahnen, ein Polyethylen-Fügerand vorgesehen sein. Auch eine Verbindung über eine chemische Verschweißung mittels aktivierbarem Polyethylenrand oder auf andere Weise ist möglich.

Erfindungsgemäße Dichtungselemente können als Fliese oder Platte ausgebildet sind. In beiden Fällen, also bei Dichtungselementen oder Dichtungsbahnen, können Bereiche mit unterschiedlicher Farbumschlagstemperatur vorgesehen sein. Ferner kann die verwendete Formmasse zumindest abschnittsweise durch weiße Farbpigmente weiß eingefärbt und/oder auch zumindest abschnittsweise durch schwarze Farbpigmente schwarz eingefärbt sein. Natürlich können auch alle anderen Platten Verwendung finden. So lassen sich bei gleicher Temperatur, unterhalb des Farbumschlags aller Bereiche, farbige Bereiche realisieren, die bei Temperaturerhöhung oder -senkung zu unterschiedlichen Temperaturen die Farbe ganz oder bereichsweise ändern können.

Zur Realisierung einer Signalgebung können die Dichtungsbahnen und -elemente auch über eine Heizung aufheizbar sein, um unabhängig von der Umgebungstemperatur den Farbumschlag als Signal nutzen zu können. Dies kann beispielsweise über einen elektrischen Leiter erfolgen, der als Widerstandsheizung genutzt werden kann. So kann etwa in einem Schwimmbad der Bademeister durch Aktivierung dieser Heizwirkung und den damit einhergehenden Farbumschlag der Schwimmbadabdichtung Badegäste vor Gefahren warnen oder zum Verlassen des Bades auffordern, etwa durch rotes Einfärben des oberen Beckenrandes.

Der Formmasse können zusätzliche Duftstoffe oder Geruchsstoffe zur Insektenabwehr zugemischt werden, die sich im Laufe der Zeit aus der Formmasse nach und nach durch Diffusion lösen. Auf diese Weise können Insekten an der Beschädigung oder Verschmutzung gehindert werden oder auch nur Badegäste vor Belästigungen geschützt werden.

Weitere Merkmale und Vorteile der Erfindung ergeben sich der nachfolgenden Beschreibung bevorzugter Ausführungsbeispiele anhand der Zeichnungen.

In den Zeichnungen zeigt:
- Fig. 1: eine Fläche eines Gebäudes, die mit einer erfindungsgemäßen Dichtungsbahn versehen ist,
- Fig. 2: einen ersten Aufbau einer erfindungsgemäßen Dichtungsbahn,
- Fig. 3: einen zweiten Aufbau einer erfindungsgemäßen Dichtungsbahn und
- Fig. 4: einen dritten Aufbau einer erfindungsgemäßen Dichtungsbahn.

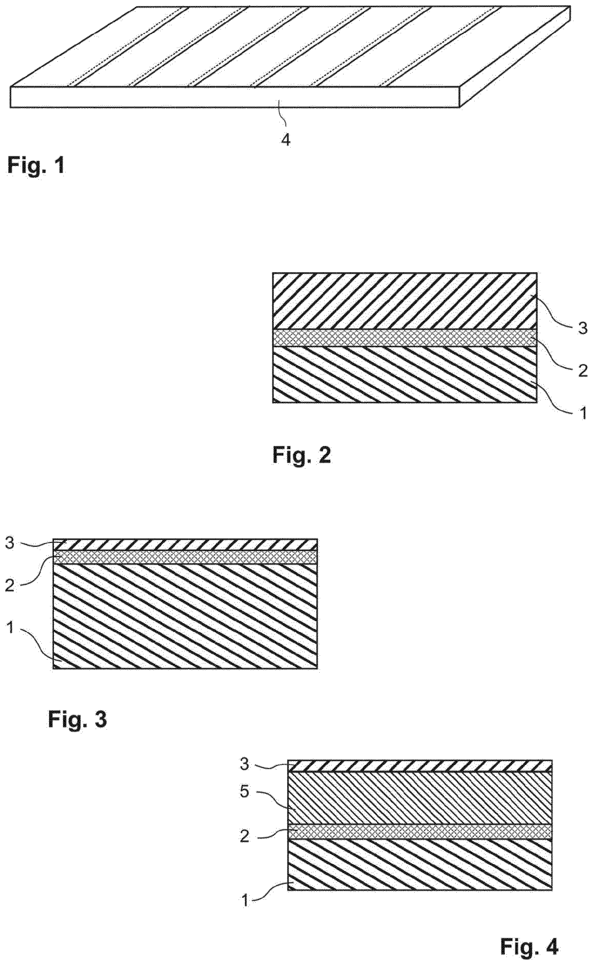

In Figur 1 eine Fläche 4 eines Gebäudes dargestellt, auf der nebeneinander mehrere Lagen der Dichtungsbahn aufgebracht sind. Der Schichtaufbau dieser Dichtungsbahn ist in den Figuren 2 bis 4 anhand dreier exemplarischer Ausführungsbeispiele dargestellt.

In Figur 1 ist ein beispielhafter Grundaufbau der Dichtungsbahn wiedergeben. Die Dichtungsbahn weist eine Trägerschicht 1 auf, auf die eine lastaufnehmende Schicht 2 aufgebracht ist. Dies kann über Laminieren oder thermisches Schweißen in einem Extruder oder einem Kalander geschehen. Auf die lastaufnehmende Schicht 2 ist wiederum eine Schicht mit thermochromen Eigenschaften aufgebracht, die als Oberflächenschicht 3 dient. Im gezeigten ersten Ausführungsbeispiel ist die Dicke der Oberflächenschicht 3 ungefähr genauso groß wie die Dicke der Trägerschicht 1. Die lastaufnehmende Schicht 2 ist naturgemäß sehr viel dünner.

Im gezeigten Ausführungsbeispiel befindet sich die lastaufnehmende Schicht 2 in der neutralen Zone, also in der Mitte der Dichtungsbahn. Dies bedeutet, dass sie bei Biegen der Dichtungsbahn geringstmöglich auf Zug belastet wird. Die Trägerschicht 1 kann aus einem Kunststoffmaterial bestehen, dem weitere Füllstoffe zugegeben werden können, so dass die Trägerschicht 1 aus vergleichsweise preiswertem Material hergestellt werden kann. Durch die Materialauswahl keine besonders einfache und dauerfeste Verbindung mit der Fläche 4 und/oder der lastaufnehmen Schicht 2 sichergestellt werden.

Figur 3 zeigt einen etwas anderen Aufbau der Dichtungsbahn. Hier ist die lastaufnehmende Schicht 2 sehr viel höher angeordnet und in etwa so dick wie die Oberflächenschicht 3. Dies bedeutet im Umkehrschluss, dass die Trägerschicht 1 sehr viel dicker ist als im Ausführungsbeispiel nach Figur 2. Diese Ausgestaltung hat den Vorteil, dass die Dicke der Dichtungsbahn im Wesentlichen von der Trägerschicht 1 bereitgestellt wird, die aus dem preiswertesten der drei Materialien hergestellt werden kann.

Figur 4 wiederum zeigt einen dritten Aufbau einer erfindungsgemäßen Dichtungsbahn. Hier besteht die Schicht oberhalb der lastaufnehmenden Schicht 2 aus zwei Einzelschichten. Diese beiden Einzelschichten sind zum einen die Oberflächenschicht 3 mit den thermochromen Pigmenten und zum anderen eine Zwischenschicht 5, die ebenfalls aus eigenem Material hergestellt werden kann. Dieses dritte Ausführungsbeispiel kombiniert also den Vorteil, dass die lastaufnehmende Schicht 2 in der neutralen Zone hinsichtlich der Biegebelastung angeordnet ist, mit der Verwendung preiswerter Materialien für den überwiegenden Teil der Dichtungsbahn.

Bevorzugte Anteile der Oberflächenschicht 3 an der Gesamtdicke der Dichtungsbahn sind zum Beispiel 2 % bis 20 %. Gleiches gilt die lastaufnehmende Schicht 2. Dies bedeutet, dass die Trägerschicht 3 im Ausführungsbeispiel nach Figur 2 oder die Kombination aus der Trägerschicht 3 und der Zwischenschicht 5 im Ausführungsbeispiel nach Figur 4 zwischen 60 und 96 % der Gesamtdicke bereitstellen. Durch die Verwendung geeigneter Materialien kann dies genutzt werden, um zum einen die Verwendung der teuren thermochromen Partikel zu minimieren und zum anderen um möglichst günstige Eigenschaften der Dichtungsbahn bereitzustellen. Somit kann die Herstellung der Dichtungsbahn hinsichtlich der Kosten und der physikalischen Eigenschaften optimiert werden.

## Patentansprüche

1. Thermochromes Dichtungsbauelement, das nach einem Verfahren mit den Schritten:
• Herstellen einer ersten Polymerschmelze,
• Herstellen einer Trägerschicht (1) aus der ersten Polymerschmelze,
• Herstellen einer, thermochrome Pigmente enthaltenden, zweiten Polymerschmelze,
• Herstellen einer thermochromen Oberflächenschicht (3) aus der zweiten Polymerschmelze und Aufbringen der thermochromen Oberflächenschicht (3) auf die Trägerschicht (1), wobei
• die zweite Polymerschmelze zum Aufschmelzen auf eine Temperatur von 150°C bis 220°C erhitzt wird und bei Halten dieser Temperatur zu der Oberflächenschicht (3) verarbeitet wird,
**dadurch gekennzeichnet, dass**
die Oberflächenschicht (3) derart ausgebildet ist, dass sie einen zwei-, drei- oder mehrphasigen Farbumschlag aufweist.

2. Thermochromes Dichtungsbauelement nach Anspruch 1, **dadurch gekennzeichnet, dass** bei Herstellung der zweiten Polymerschmelze Stabilisatoren zugesetzt werden.

3. Thermochromes Dichtungsbauelement nach einem der beiden vorhergehenden Ansprüche, **dadurch gekennzeichnet, dass** zwischen der Trägerschicht (1) und der Oberflächenschicht (3) eine lastaufnehmende Schicht (2) vorgesehen ist.

4. Thermochromes Dichtungsbauelement nach einem der vorhergehenden Ansprüche, **dadurch gekennzeichnet, dass** die lastaufnehmende Schicht (2) Glasfasern enthält, insbesondere ein Glasfasergewebe oder ein Glasfaservlies ist.

5. Thermochromes Dichtungsbauelement nach einem der vorhergehenden Ansprüche, **dadurch gekennzeichnet, dass** zwischen der Oberflächenschicht (3) und der lastaufnehmenden Schicht (2) eine zusätzliche Zwischenschicht (5) vorgesehen ist, die insbesondere aus recyceltem Kunststoff hergestellt ist.

6. Thermochromes Dichtungsbauelement nach einem der vorhergehenden Ansprüche, **dadurch gekennzeichnet, dass** das Dichtungsbauelement als Folie, als Dachbahn, als Dichtplatte oder als Klebestreifen ausgebildet ist.

7. Thermochromes Dichtungsbauelement nach einem der vorhergehenden Ansprüche, **dadurch gekennzeichnet, dass** zur Ermöglichung einer Heißluftverschweißung angrenzender Dichtungsbahnen in zumindest einem seitlichen Randbereich ein Polyethylen-Fügerand vorgesehen ist.

8. Thermochromes Dichtungsbauelement nach einem der vorhergehenden Ansprüche, **dadurch gekennzeichnet, dass** die zweite Polymermasse zumindest abschnittsweise durch weiße Farbpigmente weiß oder schwarz eingefärbt ist.

9. Thermochromes Dichtungsbauelement nach einem der vorhergehenden Ansprüche, **dadurch gekennzeichnet, dass** das thermochrome Dichtungsbauelement unterschiedliche Bereiche aufweist, wobei in jedem Bereich die thermochromen Pigmente derart gewählt sind, dass sie einen Farbumschlag bei im Vergleich zum angrenzenden Bereich unterschiedlichen Temperaturen aufweisen.

## Claims

1. Thermochromic seal component produced by a process comprising the steps of:
• Preparing a first polymer melt,
• Preparing a support layer (1) from the first polymer melt,
• Preparing a second polymer melt containing thermochromic pigments,
• Preparing a thermochromic surface layer (3) from the second polymer melt and applying the thermochromic surface layer (3) to the carrier layer (1), wherein
• the second polymer melt is heated to a temperature of 150°C to 220°C for melting and is processed to form the surface layer (3) while maintaining this temperature,
**characterized in that**
the surface layer (3) is embodied in such a way that it comprises a two-phase, three-phase or multi-phase color change.

2. Thermochromic seal component according to claim 1, **characterized in that** stabilizers are added to the second polymer melt during preparation.

3. Thermochromic seal component according to one of the two preceding claims, **characterized in that** a load-bearing layer (2) is provided between the carrier layer (1) and the surface layer (3).

4. Thermochromic seal component according to one of the preceding claims, **characterized in that** the load-bearing layer (2) contains glass fibers, in particular is a glass fiber fabric or a glass fiber nonwoven.

5. Thermochromic seal component according to one of the preceding claims, **characterized in that** an additional intermediate layer (5), which is prepared in particular from recycled plastic, is provided between the surface layer (3) and the load-bearing layer (2).

6. Thermochromic seal component according to one of the preceding claims, **characterized in that** the seal element is embodied as a film, as a roof sheet, as a sealing plate or as an adhesive strip.

7. Thermochromic seal component according to one of the preceding claims, **characterized in that** a polyethylene joint edge is provided in at least one lateral edge region to enable hot-air welding of adjacent seal webs.

8. Thermochromic seal component according to one of the preceding claims, **characterized in that** the second polymer composition is colored at least in sections by white color pigments white or black.

9. Thermochromic seal component according to one of the preceding claims, **characterized in that** the thermochromic seal element comprises different zones, the thermochromic pigments in each zone being selected in such a way that they exhibit a color change at different temperatures compared with the adjacent zone.

## Revendications

1. Élément d'étanchéité thermochromique fabriqué selon un procédé comprenant les étapes de :
• Préparation d'une première masse fondue de polymère,
• Fabrication d'une couche de support (1) à partir de la première masse fondue de polymère,
• Préparation d'une deuxième masse fondue de polymère contenant des pigments thermochromiques,
• Préparation d'une couche de surface thermochromique (3)à partir de la deuxième masse fondue de polymère et application le couche de surface thermochromique (3) sur la couche de support (1),
• la deuxième masse fondue de polymère est chauffée à une température de 150°C à 220°C pour être fondue et est transformée en la couche de surface (3) en maintenant cette température,
**caractérisé en ce que**
la couche de surface (3) est formée de telle sorte qu'elle comprend un changement de couleur à deux, trois ou plusieurs phases.

2. Élément d'étanchéité thermochromique selon la revendication 1, **caractérisé en ce que** des stabilisateurs sont ajoutés lors de la fabrication du deuxième polymère fondu.

3. Élément d'étanchéité thermochromique selon l'une des deux revendications précédentes, **caractérisé en ce qu'**une couche d'absorption de charge (2) est prévue entre la couche de support (1) et la couche de surface (3).

4. Élément d'étanchéité thermochromique selon l'une des revendications précédentes, **caractérisé en ce que** la couche (2) absorbant la charge contient des fibres de verre, en particulier un tissu de fibres de verre ou un non-tissé de fibres de verre.

5. Élément d'étanchéité thermochromique l'une des revendications précédentes, **caractérisé en ce qu'**une couche intermédiaire supplémentaire (5) est prévue entre la couche de surface (3) et la couche supportant la charge (2), laquelle est notamment fabriquée en matière plastique recyclée.

6. Élément d'étanchéité thermochromique selon l'une des revendications précédentes, **caractérisé en ce que** l'élément d'étanchéité se présente sous la forme d'un film, d'une bande de toit, d'une plaque d'étanchéité ou d'une bande adhésive.

7. Élément d'étanchéité thermochromique selon l'une des revendications précédentes, **caractérisé en ce que**, pour permettre un soudage à l'air chaud de bandes d'étanchéité adjacentes, il est prévu dans au moins une zone de bordure latérale un bord de joint en polyéthylène.

8. Élément d'étanchéité thermochromique selon l'une des revendications précédentes, **caractérisé en ce que** la deuxième masse polymère est colorée en blanc ou en noir, au moins par sections, par des pigments blancs.

9. Élément d'étanchéité thermochromique selon l'une des revendications précédentes, **caractérisé en ce que** l'élément d'étanchéité thermochromique comprend différentes zones, les pigments thermochromiques étant choisis dans chaque zone de telle sorte qu'ils présentent un changement de couleur à des températures différentes par rapport à la zone adjacente.
